# FASCICULE DE BREVET EUROPEEN

(11) **EP 0 538 089 B1**
(45) Date de publication et mention de la délivrance du brevet: **19.11.1997**
(21) Numéro de dépôt: 92402688.3
(22) Date de dépôt: 02.10.1992
(51) Int. Cl.: G02B 6/38

(54) **Connecteur optique, notament sous-marin**
Optische Steckverbindung, insbesondere unterwassertauglich
Optical connector, especially for submarine applications

(30) Priorité: 14.10.1991 FR 9112608
(43) Date de publication de la demande: 21.04.1993
(73) Titulaire: SOCIETE ECA, Société Anonyme, 92100 Boulogne Billancourt (FR)
(72) Inventeur: Mas, George Léon Joseph Marie, F-83990 Saint Tropez (FR)
(74) Mandataire: Casalonga, Axel

(56) Documents cités:
- WO-A-86/02173
- GB-A- 2 166 261
- US-A- 4 887 883
- US-A- 4 913 514

## Description

La présente invention concerne un connecteur pour le raccordement des extrémités de deux guides d'ondes optiques.

L'invention concerne plus particulièrement un connecteur pour le raccordement de deux fibres optiques ou de deux faisceaux de fibres optiques, du type comportant deux éléments de connecteur complémentaires et dont chacun comporte un boîtier qui délimite un logement à l'intérieur duquel est reçue l'extrémité du guide d'ondes associé et qui est ouvert axialement en direction de la face d'accouplement avant du boîtier.

On connaît de nombreuses solutions pour le raccordement de deux guides d'ondes optiques qui permettent de résoudre les divers problèmes inhérents à ce type de raccordement et notamment de s'affranchir des tolérances de positionnement relatif des deux extrémités qui nuisent à une bonne transmission.

A cet effet, il est connu d'équiper l'extrémité de chacun des guides d'ondes d'une lentille asphérique qui assure un élargissement du faisceau lumineux selon par exemple la technique décrite et représentée dans le document WO-A-8600422. L'élargissement des deux faisceaux permet d'effectuer la transmission entre deux faces de contact optique qui sont parallèles et le signal lumineux ne subit pas de déviation. Le positionnement relatif des enveloppes des deux faces de contact peut être assuré par un accouplement du type mâle-femelle éventuellement complété par des dispositifs de centrage à billes.

Il est toutefois particulièrement important que les faces optiques en contact, qui sont par exemple chacune constituée par une lame en verre à faces parallèles, soient particulièrement propres afin d'éviter de nuire à la qualité de la transmission optique.

Ce problème de la propreté des extrémités des guides d'ondes optiques à relier est particulièrement important dans le cas des connecteurs pour le raccordement sous-marin qui sont utilisés notamment dans les réseaux de transmission d'information des installations pétrolières sous-marines de grande profondeur.

Lorsqu'un câble optique est débranché, et compte tenu de la durée des interventions de maintenance en milieu sous-marin, les extrémités des guides d'ondes, et notamment les lames à faces parallèles, sont soumises au milieu marin environnant qui est susceptible de présenter des particules en suspension qui produisent des dépôts nuisibles à la qualité de la transmission optique.

Afin de remédier à cet inconvénient, le document WO-A-8602173 propose un connecteur du type mentionné précédemment dont chaque élément de connecteur comporte un boîtier qui délimite un logement à l'intérieur duquel est reçue l'extrémité du guide d'ondes associé et qui est ouvert axialement en direction de la face avant d'accouplement du boîtier dans lequel chaque élément de connecteur comporte un dispositif d'obturation du logement dont l'ouverture est commandée lors de l'accouplement des deux éléments de connecteur.

Dans ce document, chaque dispositif d'obturation est constitué par une membrane déformable élastiquement, percée en son centre et qui, lors de chaque connexion, est traversée par un élément mâle associé à une fibre de l'un des éléments de connecteur. La fiabilité d'une telle conception est très difficile à garantir, notamment lors du désaccouplement car elle est tributaire des efforts de friction appliqués par les membranes sur l'élément mâle et des valeurs précises de tarage des différents ressorts de rappel.

Le document US-A-4.913.514 décrit et représente un connecteur selon le préambule de la revendication 1. Dans ce document, chaque dispositif d'obturation est constitué par un rideau mobile dont le but est de protéger automatiquement les fibres optiques lorsqu'elles sont déconnectées, et chaque élément de connecteur comporte une broche de commande en saillie qu'il faut aligner angulairement avec le trou correspondant de l'élément de connecteur complémentaire.

Afin de remédier à ces inconvénients, l'invention propose un connecteur tel que défini à la partie caractérisante de la revendication 1.

Les autres caractéristiques de l'invention sont définies aux revendications secondaires.

Grâce au dispositif d'obturation qui équipe chaque élément de connecteur, il est notamment possible de protéger complètement les faces de contact optique des extrémités des guides d'ondes optiques lorsque les éléments de connecteur ne sont pas accouplés et de maintenir en permanence les extrémités dans un logement qui contient, dans le cas d'un connecteur sous-marin, un liquide d'indice déterminé qui est isolé du milieu marin lors du désaccouplement.

On décrira maintenant un mode de réalisation de l'invention en se reportant aux dessins annexés dans lesquels :
- La figure 1 est une vue en coupe axiale d'un mode de réalisation d'un connecteur réalisé conformément aux enseignements de l'invention sur laquelle les deux éléments de connecteur sont illustrés en position désaccouplée ;
- la figure 2 est une vue de détail à plus grande échelle du volet d'obturation et de ses moyens de commande en pivotement selon coupe 2-2 de la Figure 4 ;
- la figure 3 est une vue en section selon la ligne 3-3 de la figure 2 ;
- la figure 4 est une vue de dessous du volet d'obturation de la figure 2 ; et
- les figures 5 à 8 sont des vues similaires à celle de la figure 1 illustrant différentes positions relatives des deux éléments de connecteur lors de l'opération d'accouplement.

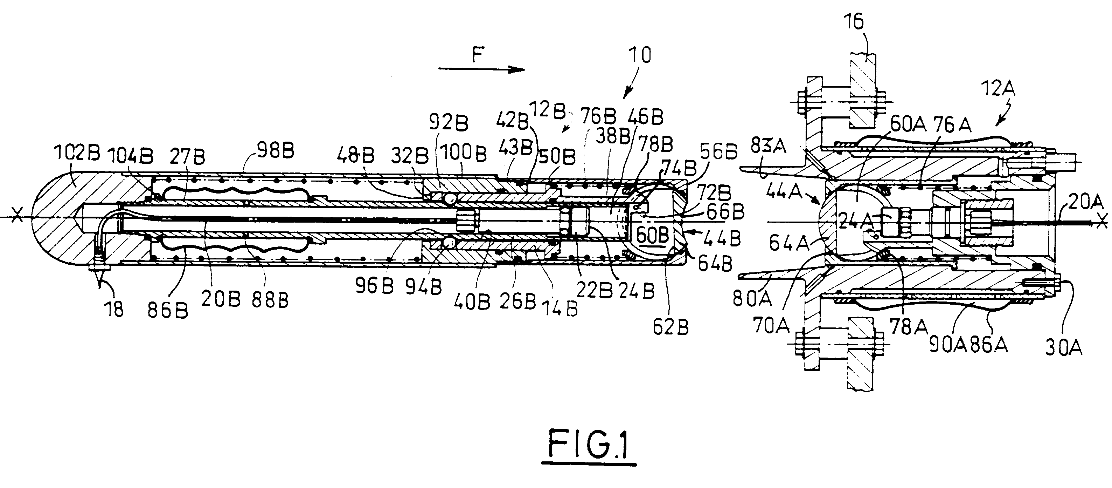

Le connecteur 10 illustré à la figure 1 est constitué de deux éléments de connecteur 12A et 12B d'axe général commun X-X.

Chaque élément de connecteur présente pour l'essentiel de ses composants une symétrie de révolution autour de l'axe X-X.

L'élément de connecteur 12A est illustré sous la forme d'un élément de connecteur fixe appelé embase dont le boîtier 14A est fixé sur un support 16 tandis que le second élément de connecteur 12B est illustré sous la forme d'un élément de connecteur mobile appelé fiche disposé à l'extrémité d'un câble optique 18.

Le connecteur 10 a pour fonction d'assurer la transmission d'ondes optiques entre un premier guide d'ondes optiques 20A et un second guide d'ondes optiques 20B.

L'extrémité 22A, 22B de chaque guide d'ondes optiques est réalisée sous la forme d'un dispositif optique tel que par exemple un dispositif à lentille asphérique (non représentée) qui se termine par une face d'extrémité 24A, 24B qui est perpendiculaire à l'axe général de transmission optique qui est sensiblement parallèle à l'axe X-X de connexion.

Dans le premier élément de connecteur 12A, le dispositif optique 22A est monté fixe à l'intérieur du boîtier 14A par l'intermédiaire d'un fourreau interne 26A dont la bride radiale arrière 28A est fixée par des vis 30A sur la face arrière 32A du boîtier 14A.

Un joint d'étanchéité 34A assure l'étanchéité entre le fourreau 26A et le boîtier 14A.

Le corps du dispositif optique 22A est monté vissé à l'intérieur du fourreau 26A et un joint d'étanchéité 36A est interposé entre la surface externe du dispositif 22A et l'alésage interne du fourreau 26A qui le reçoit.

Le fourreau 26A se prolonge axialement vers la face avant d'accouplement du boîtier 14A par un doigt 38A, dont la fonction sera expliquée ultérieurement mais dont on peut noter dès à présent qu'il est fixe par rapport au boîtier 14A, c'est-à-dire qu'il est immobilisé en rotation et axialement par rapport à celui-ci.

L'alésage interne 40A du boîtier qui reçoit le fourreau fixe 26A reçoit également en coulissement un élément tubulaire 42A qui constitue le chariot de commande d'un volet d'obturation 44A dont la fonction est d'obturer de manière étanche le logement interne 46A délimité à l'intérieur du boîtier 14A.

L'élément 42A comporte, à son extrémité arrière, un épaulement radial externe 48A qui délimite sa première position axiale illustrée à la figure 1 par rapport au boîtier 14A.

Ce même épaulement radial 48A est susceptible de coopérer, par l'intermédiaire de sa face radiale tournée vers l'arrière, avec un épaulement radial en vis-à-vis 50A formé sur le fourreau fixe 26A pour définir la seconde position axiale de l'élément tubulaire 42A par rapport au boîtier 14A comme cela sera décrit par la suite.

L'élément tubulaire 42A est monté coulissant de manière étanche dans la portion d'alésage 41A du boîtier 14A et se termine à la partie avant par un épaulement radial interne 52A qui délimite d'une part une ouverture avant circulaire 54A et, d'autre part, une face d'extrémité avant 56A perpendiculaire à l'axe X-X.

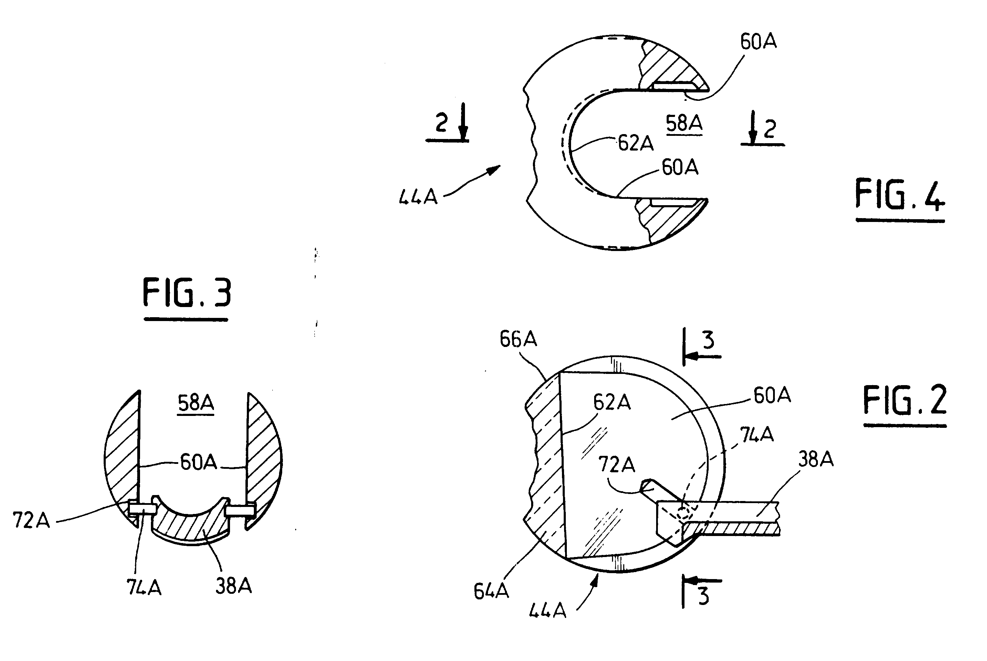

On décrira maintenant le volet d'obturation 44A en se reportant notamment aux figures 2 à 4.

Le volet 44A est une pièce de forme générale sphérique dans lequel est formé un évidement 58A délimité par deux faces latérales parallèles et opposées 60A et par une face avant semi-cylindrique 62A.

Dans la position d'obturation illustrée à la figure 1, la face 62A a ses génératrices sensiblement perpendiculaires à l'axe X-X qui est parallèle aux faces latérales 60A.

La portion avant 64A du volet d'obturation 40A présente sensiblement la forme d'une calotte sphérique pleine dont la surface externe 66A est en contact avec la face interne 68A de l'épaulement 52A du chariot tubulaire 42A.

Un joint d'étanchéité 70A est agencé dans la surface interne 68A, cette dernière constituant une surface de guidage du pivotement du volet d'obturation 44A.

Chacune des faces latérales 60A comporte une came inclinée 72A.

Le doigt fixe 38A s'étend axialement entre les faces latérales 60A de l'évidement 58A et son extrémité est équipée de deux taquets coaxiaux et opposés 74A qui sont reçus dans les rainures 72A formant cames.

La coopération des taquets 74A avec les rainures 72A, outre qu'elle permet de provoquer le pivotement du volet d'obturation 44A autour d'un axe général perpendiculaire à l'axe X-X, assure également l'immobilisation en rotation du volet d'obturation 44A autour de cet axe X-X.

La surface externe sphérique du volet d'obturation 44A est maintenue en contact contre la surface de guidage 68A au moyen d'un ressort hélicoïdal de compression 76A agencé à l'intérieur du chariot tubulaire 42A.

Le ressort hélicoïdal 76A prend appui d'une part contre l'épaulement fixe 50A du fourreau 26A du boîtier 14A et d'autre part contre la surface externe sphérique par l'intermédiaire d'un patin annulaire 78A.

Outre sa fonction de mise en contact de la surface sphérique du volet d'obturation contre la surface de guidage en rotation 68A, le ressort hélicoïdal de compression 76A sollicite également le chariot de commande tubulaire 42A vers sa première position illustrée à la figure 1.

La partie avant du boîtier 14A se termine par un prolongement axial cylindrique 80A dont le profil interne est conique pour faciliter le guidage du second élément de connecteur 12B lors de l'accouplement.

Le boîtier 14A est également équipé d'une enveloppe cylindrique extérieure rigide 82A qui est percée de multiples trous radiaux 84A et qui est elle-même entourée par un organe élastique étanche déformable 86A.

Le corps du boîtier 14A comporte également un trou radial 88A qui met en communication le logement 46A avec la chambre d'équilibrage de pression 90A délimitée extérieurement par la membrane 86A.

Dans sa position illustrée à la figure 1, on remarque immédiatement que le logement 46A est un logement parfaitement étanche dont la pression interne est maintenue à une valeur déterminée au moins égale à la pression du milieu extérieur environnant par la membrane d'équilibrage 86A.

On décrira maintenant plus brièvement le second élément de connecteur 12B dont les éléments et composants identiques ou équivalents à ceux du premier élément de connecteur 12A sont désignés par les mêmes chiffres de référence indicés B.

Le boîtier 14B est ici réalisé venu de matière en une seule pièce avec le doigt 38B tandis que le fourreau 26B qui reçoit le dispositif optique 22B est monté coulissant dans l'alésage interne 40B du boîtier 14B.

La face avant de la portion de calotte sphérique 64B du volet d'obturation 44B comporte une portion de surface sphérique concave 66B complémentaire de la surface 66A.

Le chariot tubulaire de commande 42B est ici monté coulissant de manière étanche autour du boîtier 14B. A cet effet, la partie d'extrémité arrière 43B du chariot tubulaire 42B est fixée de manière étanche sur une douille 92B qui est montée coulissante sur la surface cylindrique externe du boîtier 14B et qui se termine par un épaulement radial interne 48B qui coopère avec la face d'extrémité arrière 32B du boîtier 14B pour délimiter la première position du chariot 42B illustré à la figure 1.

Le fourreau 26B est illustré à la figure 1 dans sa première position axiale rétractée par rapport au boîtier 14B dans laquelle il est maintenu par des billes de verrouillage 94B qui sont reçues dans une gorge annulaire 96B formée dans la surface cylindrique externe du fourreau coulissant 26B.

La membrane d'équilibrage en pression 86B est ici agencée axialement autour de la partie arrière 27B du fourreau coulissant 28B et l'ensemble est protégé par un capuchon cylindrique 98B qui est monté coulissant sur la surface cylindrique externe 100B de la douille 92B.

Le fond arrière du capuchon 98B est constitué par un bouchon 102B qui reçoit de manière étanche l'extrémité de la partie arrière 27B du fourreau coulissant 26B et qui prend appui axialement contre un épaulement radial 104B de cette dernière.

Le diamètre interne de la paroi cylindrique du capuchon 98B est conçu de manière à pouvoir coulisser sur la surface cylindrique externe 100B de la douille 92B ainsi que sur la surface cylindrique externe du chariot tubulaire coulissant 42B.

On décrira maintenant le mode de fonctionnement du connecteur 10 en partant de la position désaccouplée illustrée à la figure 1 sur laquelle on a également indiqué la direction d'accouplement par la flèche F.

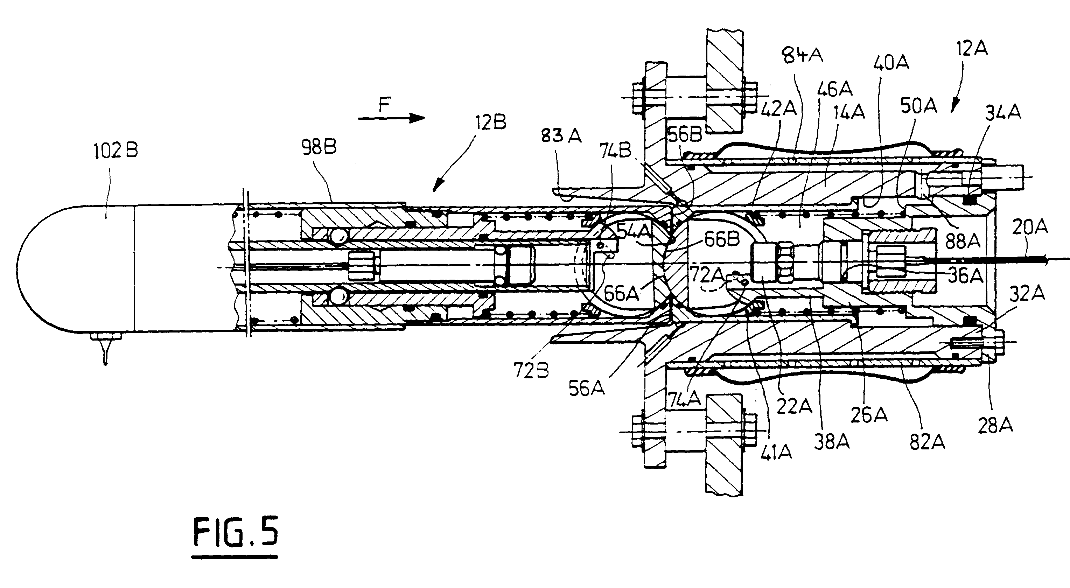

En partant de la position désaccouplée dans laquelle les deux logements 46A et 46B sont obturés de manière étanche par les volets 44A et 44B, l'opérateur déplace axialement l'élément de connecteur 12B par rapport à l'embase 12A jusqu'à ce que les faces 56A et 56B des deux chariots tubulaires de commande viennent en contact mutuel comme cela est illustré à la figure 5.

Ce premier mouvement est facilité par la surface conique 83A du boîtier 14A.

Dans cette position illustrée à la figure 5, les surfaces sphériques convexes 66A et concaves 66B sont en contact mutuel et leur rapprochement a eu pour effet de chasser le liquide du milieu environnant qui se trouvait en contact avec ces deux portions de surfaces sphériques tant que les deux éléments de connecteur étaient totalement séparés.

Du fait du tarage déterminé des différents ressorts de rappel et des efforts de friction dus aux joints d'étanchéité, la poursuite d'un effort de poussée appliqué à la fiche 12B par l'opérateur provoque ensuite le coulissement axial vers sa seconde position du chariot de commande 42A du premier élément de connecteur 12A.

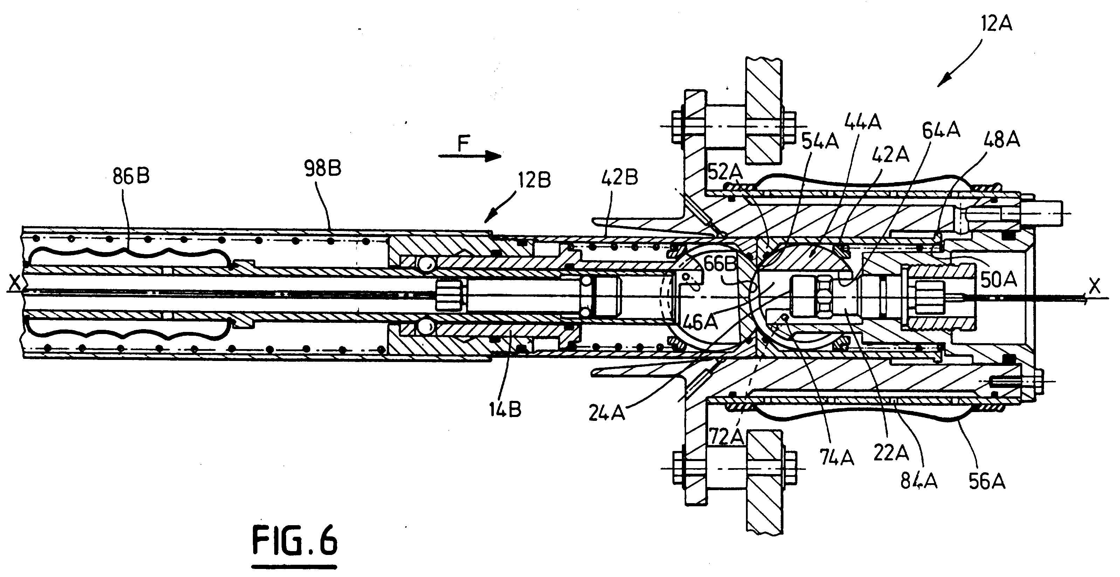

Les différents éléments occupent alors leur position illustrée à la figure 6 dans laquelle on constate que le volet d'obturation 44A a pivoté de 90° dans le sens horaire de manière à dégager entièrement l'ouverture 54A, la portion de surface cylindrique 62A ayant ses génératrices alors sensiblement parallèles à l'axe X-X.

Dans cette position, la face plane d'extrémité 24A du dispositif optique 22A est en regard de l'ouverture dégagée 54A.

Le pivotement du volet d'obturation 44A résulte bien entendu de l'action des taquets 74A qui coopèrent avec les cames 72A pour provoquer le mouvement de pivotement.

Dans cette position intermédiaire illustrée à la figure 6, les composants du premier élément de connecteur 12A occupent leur position définitive d'accouplement.

II est à noter que, même au cas où une légère pellicule d'eau polluée serait restée entre les surfaces 66A et 66B, aucune impureté n'a pu pénétrer dans le logement 46A du fait de la présence de la membrane 86A et de la pénétration du chariot 42A à l'intérieur du boîtier 14A qui a eu pour effet de diminuer le volume global du logement étanche 46A et donc de provoquer un phénomène d'expulsion d'une très faible quantité du liquide d'indice vers l'extérieur qui a chassé les impuretés, chacun des deux éléments 12A et 12B constituant une réserve de liquide pour permettre plusieurs opérations d'accouplement.

L'opérateur poursuit ensuite l'opération d'accouplement en continuant d'appliquer un effort selon la direction F à la fiche 12B.

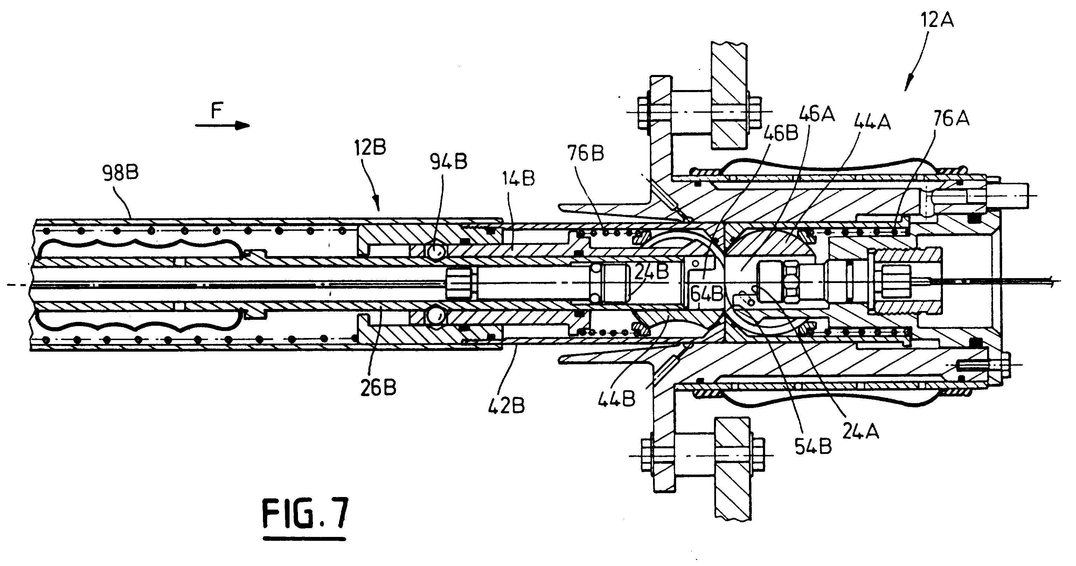

Cet effort supplémentaire a pour effet de provoquer un déplacement axial relatif du chariot tubulaire de commande 42B par rapport au boîtier 14B depuis sa première position qu'il occupait encore à la figure 6 vers sa seconde position illustrée à la figure 7.

De la même manière que lors de l'étape précédente, le mouvement de coulissement du chariot 42B a eu pour effet de provoquer le pivotement du second volet d'obturation 44B vers sa position escamotée illustrée à la figure 7.

Du fait de ce pivotement, les deux logements 46B et 46A sont alors en communication par l'intermédiaire des ouvertures 54A et 54B qui sont alors dégagées par les portions correspondantes des volets d'obturation.

Comme on le constate à la figure 7, les faces d'extrémité 24B et 24A des deux dispositifs optiques sont entièrement dégagées mais ne sont pas encore en contact mutuel afin d'assurer une bonne qualité des transmissions optiques.

En effet, en se référant à la figure 7, on constate que le fourreau coulissant 26B occupe toujours sa position axiale rentrée par rapport au boîtier 14B dans laquelle la face avant 24B est située à l'intérieur du boîtier 14B en arrière de l'ouverture 54B.

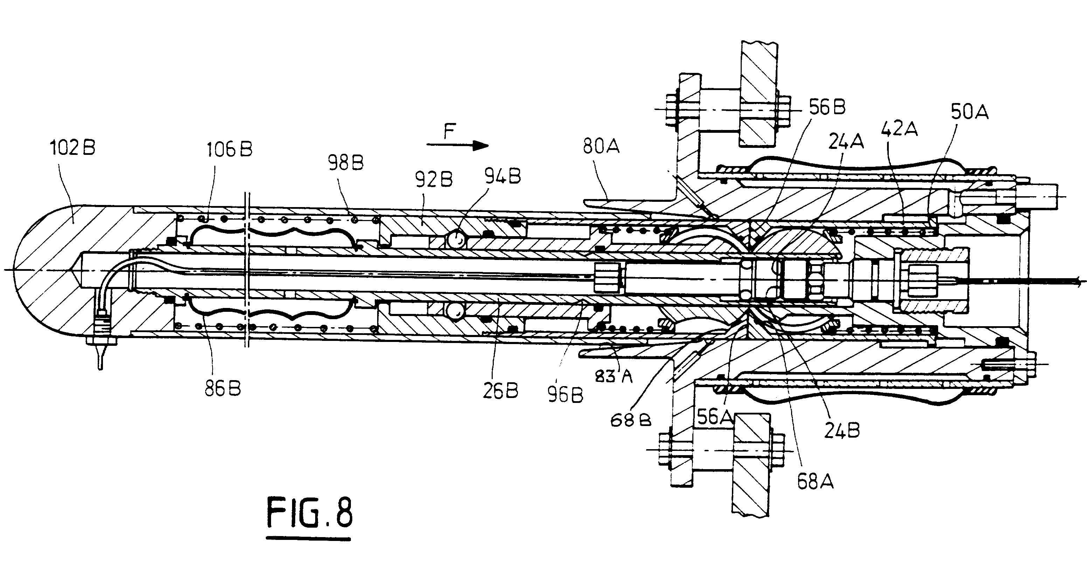

Pour amener les deux faces d'extrémité 24A et 24B en contact comme cela est illustré à la figure 8, l'opérateur applique un effort axial supplémentaire à l'élément de connecteur 12B qu'il tient en main par l'intermédiaire du capuchon de fermeture 98B.

La totalité de cet effort supplémentaire est alors transmise par l'intermédiaire du bouchon 102B et de l'épaulement radial 104B au fourreau coulissant 26B.

Cet effort plus important a pour effet de provoquer le déverrouillage du mécanisme à billes 94B qui libère le fourreau coulissant 26B qui peut se déplacer axialement en direction de l'embase 12A.

Lors de ce mouvement qui aboutit à la position finale d'accouplement illustrée à la figure 8, la paroi cylindrique du capuchon 98B coulisse par rapport à la douille 92B et au chariot tubulaire 42B qui lui est lié et qui ne peuvent pas se déplacer axialement vers la droite du fait de l'appui commun des surfaces d'extrémité 56A et 56B et de la venue en butée arrière du chariot 42A contre l'épaulement radial 50A.

L'effort appliqué par l'opérateur permet donc de provoquer un coulissement du fourreau 26B jusqu'à ce que les surfaces d'extrémité 24A et 24B soient en contact comme cela est illustré à la figure 8.

II est à noter que les déplacements effectués par les différents composants entre les positions illustrées aux figures 7 et 8 sont accomplis dans un milieu liquide propre et qu'aucune pollution ou particule n'a donc pu venir s'interposer entre les faces parallèles 24A et 24B.

L'accouplement des deux éléments de connecteur peut être éventuellement complété par des moyens de verrouillage en position accouplée (non représentés).

Les opérations en vue du désaccouplement s'effectuent dans l'ordre inverse de celles qui viennent d'être décrites, en commençant par exercer un effort de traction dans le sens inverse de la flèche F sur le capuchon 98B dont le recul par rapport à la douille 92B est facilité par l'agencement d'un ressort hélicoïdal de compression 106B entre le bouchon arrière 102B et la face en vis-à-vis de la douille 92B.

## Revendications

1. Connecteur (10) pour le raccordement, notamment sous-marin, des extrémités (22A, 22B) de deux guides d'ondes optiques (20A, 20B), notamment de deux fibres optiques ou de deux faisceaux de fibres optiques, du type comportant deux éléments de connecteur complémentaires (12A, 12B) emboîtables axialement l'un dans l'autre ;
chacun de ces éléments de connecteur comportant un boîtier (14A, 14B) qui délimite un logement (46A, 46B) à l'intérieur duquel est reçue l'extrémité du guide d'ondes associé (20A, 20B), ce logement étant ouvert en direction de la face avant d'accouplement du boîtier,
chacun desdits éléments de connecteur comportant en outre un dispositif (44A, 44B) d'obturation du logement correspondant (46A, 46B) dont l'ouverture est commandable par l'accouplement des deux éléments, ledit dispositif d'obturation comprenant un volet (44A, 44B) déplaçable entre une première position extrême vers laquelle il est rappelé par des moyens élastiques (76A, 76B) et dans laquelle il obture ledit logement (46A, 46B) lorsque les deux éléments ne sont pas accouplés et une seconde position extrême dans laquelle il est escamoté lorsque ces deux éléments sont accouplés ;
chacun desdits dispositifs d'obturation (44A, 44B) comprenant en outre des moyens mobiles (42A, 72A, 74A, 42B, 72B, 74B) pour déplacer le volet correspondant (44A, 44B) entre ses deux positions extrêmes, lesdits moyens mobiles de déplacement du volet de chacun desdits éléments de connecteur étant actionnables lors de l'accouplement des deux éléments par des moyens de commande d'ouverture agencés sur l'autre élément ;
caractérisé :
en ce que chaque volet (44A, 44B) est monté pivotant, autour d'un axe orthogonal à l'axe général (X-X) de l'élément de connecteur correspondant (12A, 12B), entre une première position angulaire extrême pour laquelle il obture ledit logement (46A, 46B) de manière étanche et une seconde position angulaire extrême pour laquelle il est escamoté ;
en ce que chaque moyen mobile de déplacement du volet correspondant comprend un chariot tubulaire (42A, 42B) dans l'extrémité avant duquel ledit volet est monté pivotant, ledit chariot tubulaire étant monté coulissant axialement par rapport au boîtier correspondant (14A, 14B) entre une première position axiale extrême dans laquelle il est plus avancé axialement par rapport au boîtier et vers laquelle il est rappelé par lesdits moyens élastiques (76A, 76B) et une seconde position axiale extrême dans laquelle ledit chariot est plus rétracté axialement par rapport audit boîtier ; chaque moyen mobile de déplacement du volet pivotant correspondant comprenant en outre un mécanisme (72A, 74A, 72B, 74B) monté entre ledit volet et le boîtier correspondant de façon à provoquer le pivotement dudit volet entre sa position angulaire d'obturation et sa position angulaire escamotée sous l'effet du déplacement axial du chariot correspondant entre sa position axiale avancée et sa position axiale rétractée ;
et en ce que chacune desdits moyens de commande de l'ouverture du dispositif d'obturation de l'autre élément de connecteur est constitué par l'extrémité avant (56A, 56B) du chariot tubulaire correspondant (42A, 42B), lesdites extrémités avant des deux chariots étant conçues pour coopérer l'une avec l'autre lors de l'accouplement des deux éléments de façon à provoquer le coulissement de chacun des chariots vers sa position axiale rétractée pour laquelle le volet correspondant est amené dans sa position angulaire escamotée.

2. Connecteur selon la revendication 1, caractérisé en ce que ledit mécanisme comporte au moins une came de commande (72A, 72B) formée sur le volet (44A, 44B) et qui coopère avec au moins un taquet fixe (74A, 74B) relié au boîtier (14A, 38A, 14B, 38B) et qui s'étend parallèlement à l'axe de pivotement du volet.

3. Connecteur selon la revendication 2, caractérisé en ce que le volet d'obturation (44A, 44B) est réalisé sous la forme d'un élément sphérique comportant un évidement central débouchant (58A) délimité par deux faces latérales (60A) perpendiculaires à l'axe de pivotement du volet et entre lesquelles s'étend axialement un doigt fixe du boîtier (38A) qui comporte deux taquets (74A) opposés et alignés qui sont reçus respectivement dans deux cames parallèles et opposées (72A) formées dans lesdites faces latérales (60A).

4. Connecteur selon la revendication 3, caractérisé en ce que la surface sphérique externe du volet d'obturation prend appui contre des surfaces complémentaires de guidage (68A, 68B), du chariot (42A, 42B).

5. Connecteur selon l'une quelconque des revendications 1 à 4, caractérisé en ce que l'extrémité avant (54A, 54B) du chariot (42A, 42B) délimite une ouverture (54A, 54B) avec laquelle coopère le volet d'obturation (44A, 44B).

6. Connecteur selon la revendication 5, prise en combinaison avec la revendication 4, caractérisé en ce que lesdites surfaces complémentaires de guidage (68A, 68B) sont formées sur la face interne d'un bord radial interne (52A, 52B) de l'extrémité avant de l'élément tubulaire qui délimite ladite ouverture (54A, 54B), et en ce que la surface sphérique externe du volet (44A, 44B) est sollicitée élastiquement en contact contre les surfaces de guidage (68A, 68B) par un ressort hélicoïdal de compression (76A, 76B) qui prend appui d'une part sur la surface externe du volet d'obturation et, d'autre part, contre un épaulement radial interne (50A, 50B) du boîtier (14A, 14B) pour constituer les moyens de rappel élastique du chariot (42A, 42B) vers sa première position.

7. Connecteur selon l'une quelconque des revendications précédentes, caractérisé en ce que l'extrémité (22A) du guide d'ondes associé à un premier élément de connecteur (12A) est immobilisée axialement par rapport au boîtier (14A, 26A) de ce premier élément de connecteur (12A), et en ce que l'extrémité (22B) du guide d'ondes associé au second élément de connecteur (12B) est montée coulissante par rapport au boîtier (14B) de ce second élément entre une position rétractée dans laquelle elle est située en arrière de l'ouverture (54B) du logement (46B) et une position sortie dans laquelle, en position accouplée, elle est en contact avec l'extrémité (22B) de l'autre guide d'ondes (20A).

8. Connecteur selon la revendication 7 prise en combinaison avec l'une quelconque des revendications 1 à 6, caractérisé en ce que le guide d'ondes optiques (20B, 22B) associé au second élément de connecteur (12B) est fixé dans un fourreau (26B) monté coulissant par rapport au boîtier (14B), et en ce qu'il est prévu des moyens (94B, 96B) de verrouillage en position rétractée du fourreau (26B) par rapport au boîtier (14B).

9. Connecteur selon l'une quelconque des revendications précédentes, caractérisé en ce que, en position fermée du dispositif d'obturation (44A, 44B), le logement (46A, 46B) est étanche, et en ce que chaque élément de connecteur (12A, 12B) comporte des moyens (86A, 86B) pour maintenir le pression à l'intérieur du logement à une valeur égale à la pression régnant dans le milieu extérieur environnant.

10. Connecteur selon l'une quelconque des revendications précédentes, caractérisé en ce que l'extrémité de chacun des guides d'ondes (22A, 22B) comporte des moyens d'élargissement du faisceau lumineux, et en ce que la transmission est effectuée entre deux faces de contact optique qui sont parallèles.

## Patentansprüche

1. Stecker (10) zur Verbindung, insbesondere im Unterwasserbereich, der Enden (22A, 22B) von zwei Lichtwellenleitern (20A, 20B), insbesondere von zwei optischen Fasern oder zwei Strahlen aus optischen Fasern, bestehend aus zwei aufeinander abgestimmten Verbindungselementen (12A, 12B), bei denen das eine Verbindungselement axial in das andere Verbindungselement eingekuppelt ist;
wobei jedes dieser Verbindungselemente aus einem Gehäuse (14A, 14B) besteht, das eine Lagerung (46A, 46B) bildet, deren Innenraum das Ende des zugehörigen anderen Lichtwellenleiters (20A, 20B) aufnimmt, und die in Richtung der vorderen Einkuppelseite des Gehäuses offen ist,
wobei jedes der beiden Verbindungselemente außerdem eine zum Verschließen der entsprechenden Lagerung (46A, 46B) dienende Vorrichtung (44A, 44B) umfaßt, deren Öffnungsvorgang durch Eingreifen der beiden Elemente ineinander bewirkt wird, und die des weiteren eine zwischen einer ersten Endstellung und einer zweiten Endstellung verschiebliche Klappe (44A, 44B) umfaßt, die durch elastische Mittel (76A, 76B) in die erste Endstellung, in der die Vorrichtung die genannte Lagerung (46A, 46B) verschließt, gebracht wird, und die in der zweiten Endstellung, wenn die beiden Verbindungselemente eingekuppelt sind, versenkt ist;
wobei die genannten Verschlußvorrichtungen (44A, 44B)außerdem jeweils bewegliche Elemente (42A, 72A, 74A, 42B, 72B, 74B) zum Verschieben der entsprechenden Klappe (44A, 44B) zwischen ihren beiden Endstellungen umfassen, die beim Einkuppeln der beiden Elemente über die am jeweils anderen Element angeordneten Öffnungsmittel betätigt werden;
dadurch gekennzeichnet, daß jede Klappe (44A, 44B) um eine orthogonal zur Hauptachse (X - X) des entsprechenden Steckerelementes (12A, 12B) angeordnete Achse zwischen einer ersten Winkelendstellung, in der sie die besagte Lagerung (46A, 46B) dicht verschließt, und einer zweiten Winkelendstellung, in der sie versenkt ist, schwenkbar montiert ist;
sowie dadurch, daß jedes bewegliche Mittel zur Verschiebung der zugehörigen Klappe einen rohrförmigen Verschiebebock (42A, 42B) umfaßt, in dessen vorderem Ende besagte Klappe schwenkbar montiert ist, und der Verschiebebock selbst axial zum entsprechenden Gehäuse (14A, 15B) zwischen einer ersten axialen Endstellung, in der er im Verhältnis zum Gehäuse weiter vorgezogen ist und in die er durch besagte elastische Mittel (76A, 76B) gezogen wird, und einer zweiten axialen Endstellung, in der der Verschiebebock im Verhältnis zum genannten Gehäuse axial nach hinten eingezogen ist, verschiebbar montiert ist;
jedes bewegliche Mittel zur Verschiebung der zugehörigen Schwenkklappe umfaßt außerdem einen zwischen besagter Klappe und dem entsprechenden Gehäuse montierten Mechanismus (72A, 74A, 72B, 74B), der so ausgebildet ist, daß er die Schwenkbewegung der Klappe zwischen ihrer winkligen Verschlußstellung und ihrer durch die axiale Verschiebung des zugehörigen Verschiebebocks zwischen dessen axial vorgeschobener Stellung und seiner axial eingezogenen Stellung winkligen Versenkungsstellung bewirkt;
außerdem dadurch gekennzeichnet, daß jedes der genannten Mittel zum Öffnen der Verschlußvorrichtung des anderen Steckerelementes aus dem vorderen Ende (56A, 56B) des zugehörigen rohrförmigen Verschiebebockes besteht und die genannten vorderen Enden der beiden Verschiebeböcke so ausgebildet sind, daß sie beim Einkuppeln der beiden Elemente so zusammenwirken, daß die Verschiebung eines jeden Verschiebebockes hin zu seiner in axialer Richtung eingezogenen Stellung, bei der die entsprechende Klappe in ihre versenkte Stellung gezogen wird, bewirkt wird.

2. Stecker gemäß Anspruch 2, dadurch gekennzeichnet, daß besagter Mechanismus mindestens einen auf der Klappe (44A, 44B) ausgeformten Betätigungsnocken (72A, 72B) umfaßt, der mit wenigstens einer mit dem Gehäuse (14A, 38A, 14B, 38B) verbundenen feststehenden und parallel zur Schwenkachse der Klappe verlaufenden Raste (74A, 74B) zusammenwirkt.

3. Stecker nach Anspruch 3, dadurch gekennzeichnet, daß die Verschlußklappe (44A, 44B) in Form eines mit einer zentralen frei liegenden und durch zwei senkrecht zur Schwenkachse der Klappe angeordnete Seitenflächen (60A) begrenzten Aussparung (58A) versehenen Kugelelementes ausgebildet ist, wobei ein feststehender, mit zwei einander gegenüberliegenden und fluchtenden Rasten (74A) versehener Finger des Gehäuses (38A) in axialer Richtung zwischen den beiden Seitenflächen (60A) verläuft, und diese Rasten jeweils in zwei parallele gegenüberliegende und in besagte Seitenflächen (60A) eingearbeiteten Nocken (72A) aufgenommen werden.

4. Stecker nach Anspruch 3, dadurch gekennzeichnet, daß sich die kugelige Außenfläche der Verschlußklappe gegen ergänzende Führungsflächen (68A, 68B) des Verschiebebockes (42A, 42B) abstützt.

5. Stecker gemäß einem beliebigen der Ansprüche 1 bis 4, dadurch gekennzeichnet, daß das vordere Ende (54A, 54B) des Verschiebebockes (42A, 42B) eine Öffnung (54A, 54B) begrenzt, mit der die Verschlußklappe (44A, 44B) zusammenwirkt.

6. Stecker gemäß Anspruch 5 zusammen mit Anspruch 4, dadurch gekennzeichnet, daß besagte ergänzende Führungsflächen (68A, 68B) an der Innenseite eines innen liegenden radial am vorderen Ende des die besagte Öffnung (54A, 54B) begrenzenden rohrförmigen Elementes verlaufenden Bundes (52A, 52B) ausgebildet sind, und die kugelige Außenfläche der Klappe (44A, 44B) über eine Schraubendruckfeder (76A, 76B), die sich auf der einen Seite auf der Außenfläche der Verschlußklappe und auf der anderen Seite gegen eine interne radiale Schulter (50A, 50B) des Gehäuses 14A, 14B) abstützt, federnd im Kontakt mit den Führungsflächen (68A, 68B) gehalten wird, wodurch die elastischen Mittel zum Rückholen des Verschiebebockes (42A,. 42B) in seine erste Stellung gebildet werden.

7. Stecker gemäß einem beliebigen der o.g. Ansprüche, dadurch gekennzeichnet, daß das Ende (22A) des einem ersten Steckerelement (12A) zugeordneten Wellenleiters axial zum Gehäuse (14A, 26A) des ersten Steckerelementes (12A) blockiert wird, und dadurch, daß das Ende (22B) des einem zweiten Steckerelement (12B) zugeordneten Wellenleiters zwischen einer eingezogenen Stellung, in der besagtes Ende hinter der Öffnung (54B) der Lagerung (46B) liegt, und einer zweiten ausgefahrenen Stellung, in der dieses Ende in eingekuppelter Stellung mit dem Ende (22B) des anderen Wellenleiters (20A) in Berührung ist, verschiebbar angebracht ist.

8. Stecker nach Anspruch 7 zusammen mit einem beliebigen der Ansprüche 1 bis 6, dadurch gekennzeichnet, daß der dem zweiten Steckerelement (12B) zugeordnete Leiter für optische Wellen (20B, 22B) in einem im Verhältnis zum Gehäuse (14B) verschiebbar gelagerten Futter (26B) befestigt ist und dadurch, daß Mittel (94B, 96B) zur Verriegelung in der im Verhältnis zum Gehäuse (14B) eingezogenen Stellung des Futters (26B) vorhanden sind.

9. Stecker nach einem beliebigen der vorgenannten Ansprüche, dadurch gekennzeichnet, daß die Lagerung (46A, 46B) in Schließstellung der Verschlußvorrichtung (44A, 44B) dicht ist, sowie dadurch, daß jedes Steckerelement (12A, 12B) mit Mitteln (86A, 86B) zum Halten des Drucks im Innern der Lagerung auf einem Wert, der mit dem in der umgebenden Außenatmosphäre herrschenden Druck übereinstimmt, versehen ist.

10. Stecker nach einem beliebigen der vorher genannten Ansprüche, dadurch gekennzeichnet, daß das Ende eines jeden Wellenleiters (22A, 22B) Mittel zur Lichtstrahlverbreiterung umfaßt, und dadurch, daß die Übertragung zwischen zwei parallel zueinander stehenden Seiten mit optischem Kontakt erfolgt.

## Claims

1. Connector (10) for joining together, in particular under water, the ends (22A, 22B) of two optical wave guides (20A, 20B), in particular two optical fibres or two bundles of optical fibres, of the type comprising two complementary connector elements which fit together axially inside each other;
each of these connector elements comprising a casing (14A, 14B) which defines a receptacle (46A, 46B) and in which is received the end of the associated wave guide (20A, 20B) this receptacle which is open in the direction of the front coupling face of the case,
each one of said connector elements includes also an arrangement (44A, 44B) for obturating the corresponding receptacle (46A, 46B) of which the opening is controllable by the coupling of the two elements, the said arrangement of obturation including a shutter (44A, 44B) movable between a first end position towards which it is urged by resilient means (76A, 76B) in which it obturates the said receptacle (46A, 46B) when the two elements are not coupled and a second end position in which it is concealed when the two elements are coupled;
each of the said arrangements of obturation (44A, 44B) including also mobile means (42A, 72A, 74A, 42B, 72B, 74B) for moving the corresponding shutter (44A, 44B) between its two end positions, the said mobile means of displacement of the shutter of each one of the said connector elements being engagable at the time of the coupling of the two elements by opening control means arranged on the other element;
characterised
in that each shutter (44A, 44B) is pivotally mounted, about an axis orthogonal to the general axis (X-X) of the corresponding connector element (12A, 12B), between a first end angular position for which it obturates the said receptacle (46A, 46B) in a sealed manner and a second angular position for which it is concealed;
in that each mobile means of displacement of the corresponding shutter includes a tubular carriage (42A, 42B) in the front end of which the said shutter is mounted pivotally the said tubular carriage being mounted to slide axially with respect to the corresponding casing (14A, 14B) between a first end axial position in which it is more axially displaced with respect to the casing and towards which it is urged by the said resilient means (76A, 76B) and a second end axial position in which the said carriage is less axially displaced with respect to the said casing; each mobile means of displacement of the corresponding pivotal shutter including also a mechanism (72A, 74A, 72B, 74B) mounted between the said shutter and the corresponding casing so as to cause the pivoting of the said shutter between its angular position of obturation and its concealed angular position by the effect of the axial displacement of the corresponding carriage between its advanced axial position and its retracted axial position;
and in that each one of the said opening control means of the obturation receptacle of the other connector element is made up by the front end (56A, 56B) of the corresponding tubular carriage (42A, 42B), the said front ends of the two carriages being adapted to co-operate with each other at the time of the coupling of the two elements so as to cause the sliding of each one of the carriages towards its retracted axial position for which the corresponding shutter is brought into its concealed angular position.

2. Connector according to claim 1 characterised in that the said mechanism includes at least one control cam (72A, 72B) formed on the shutter (44A, 44B) and which co-operates with at least one fixed stop (74A, 72B) connected to the casing (14A, 38A, 14A, 38B) and extending parallel to the pivotal axis of the shutter.

3. Connector according to claim 2 characterised in that the obturating shutter (44A, 44B) is realised in the form of a spherical element having a centrally open recess (58A) defined by two lateral faces (60A) perpendicular to the pivotal axis of the shutter and between which there extends axially a fixed finger of the casing (38A) which has two opposed and aligned stops (74A) which are received respectively in two opposed parallel cams (72A) formed in the said lateral faces (60A).

4. Connector according to claim 3 characterised in that the external spherical surface of the obturating shutter engages against complimentary guiding surfaces (68A, 68B) on the carriage (42A, 42B).

5. Connector according to any one of claims 1 to 4 characterised in that the front end (54A, 54B) of the carriage (42A,42B) defines an opening (54A, 54B) with which the obturating shutter (44A, 44B) co-operates.

6. Connector according to claim 5 taken in combination with claim 4 characterised in that the said complimentary guiding surfaces (68A, 68B) are formed on the internal face of a radial internal rim (52A, 52B) of the forward end of the tubular element which defines the said opening (54A, 54B) and in that the external spherical surface of the shutter (44A, 44B) is urged resiliently in contact against the guiding surfaces (68A, 68B) by a helical compression spring (76A, 76B) which abuts on the one hand on the external surface of the obturating shutter and on the other hand against an internal radial shoulder (50A, 50B) in the casing (14A, 14B) to constitute the resilient means for urging the carriage (42A, 42B) towards its first position.

7. Connector according to any one of the preceding claims characterised in that the end (22A) of the wave guide associated with a first connector element (12A) is located axially with respect to the casing (14A, 26A) of this first connector element (12A) and that the end (22B) of the wave guide associated with the second connector element (12B) is mounted to slide with respect to the casing (14B) of this second element between a retracted position in which it is situated behind the opening (54B) of the receptacle (46B) and an advanced position in which, in the coupled position, it is in contact with the end (22B) of the other wave guide (20A).

8. Connector according to claim 7 taken in combination with any one of claims 1 to 6 characterised in that the optical wave guide (20B, 22B) associated with the second connector element (12B) is secured in a sheath (26B) mounted to slide with respect to the casing (14B) and in that it is provided with means (94B, 96B) for locking the sheath (26B) in its retracted position in relation to the casing (14B).

9. Connector according to any one of the preceding claims characterised in that, in the closed position of the obturating arrangement (44A, 44B) the receptacle (46A, 46B) is sealed and in that each element of the connector (12A, 12B) has means (86A, 86B) for maintaining the pressure in the interior of the receptacle at a value equal to the pressure prevailing in the external surroundings.

10. Connector according to any one of the preceding claims characterised in that the end of each of the wave guides (22A, 22B) has means for enlarging the light bundle and in that the transmission is effected between two optical contact faces which are parallel.
